# EUROPEAN PATENT SPECIFICATION

(11) **EP 4 013 008 B1**
(45) Date of publication and mention of the grant of the patent: **07.10.2026**
(21) Application number: 20852226.8
(22) Date of filing: 06.08.2020
(51) Int. Cl.: H04W 72/0446, H04W 72/27, H04W 84/12

(54) **SERVICE TIME SCHEDULING METHOD AND APPARATUS**
DIENSTZEITPLANUNGSVERFAHREN UND -VORRICHTUNG
PROCÉDÉ ET APPAREIL DE PLANIFICATION DE TEMPS DE SERVICE

(30) Priority: 09.08.2019 CN 201910736141
(43) Date of publication of application: 15.06.2022
(73) Proprietor: Huawei Technologies Co., Ltd., Longgang Shenzhen, Guangdong 518129 (CN)
(72) Inventor: GUO, Ziyang, Shenzhen, Guangdong 518129 (CN); DENG, Cailian, Chengdu, Sichuan 611756 (CN); HAN, Xiao, Shenzhen, Guangdong 518129 (CN); LONG, Yan, Chengdu, Sichuan 611756 (CN); YAN, Li, Chengdu, Sichuan 611756 (CN); FANG, Xuming, Chengdu, Sichuan 611756 (CN)
(74) Representative: Gill Jennings & Every LLP
(86) International application number: PCT/CN2020/107489
(87) International publication number: WO 2021/027688

(56) References cited:
- WO-A1-2019/005078
- CN-A- 103 068 048
- CN-A- 108 540 305
- CN-A- 109 067 436
- CN-A- 109 905 157
- US-A1- 2015 288 427
- US-A1- 2015 295 629
- SIEMENS AG; NOKIA: "CAV–update of serviceability and service description", 3GPP DRAFT; S1-180275 WAS 117 - CAV - UPDATE OF SERVICE DESCRIPTION, vol. SA WG1, 12 February 2018 (2018-02-12), Fukuoka, Japan, pages 1 - 14, XP051405675

## Description

### TECHNICAL FIELD

Embodiments of this application relate to the field of communication technologies, and in particular, to a service period scheduling method and apparatus.

### BACKGROUND

With rapid development of technologies, increasingly high quality of service requirements are imposed on real-time traffic. In an existing protocol, a station (station, STA) supports a service of receiving only a single-access point (access point, AP). When the STA is in a moving scenario, the single-AP may not meet a traffic requirement of the STA. Consequently, service communication quality degrades, and data transmission reliability is affected.

Therefore, how to improve service communication quality and ensure data transmission reliability becomes an urgent problem to be resolved.

CN 109 067 436 A describes a backward compatible wireless local area network multi-AP cooperative communication method.

US 2015/295629 A1 describes a UniFi system using coordination for multi-AP transmissions.

US 10 305 550 B2 describes medium access control for uniform multiple access points coverage in wireless local area networks.

### SUMMARY

This application provides a service period scheduling method, computer program product, computer-readable data carrier and apparatus, to improve service communication quality and ensure data transmission reliability.

The invention is defined by the independent claims. Further embodiments of the invention are defined by the dependent claims. Although the invention is only defined by the claims, the below embodiments, examples and aspects are present for aiding in understanding the background and advantages of the invention.

### BRIEF DESCRIPTION OF DRAWINGS

FIG. 1 is a schematic diagram of a structure of a beacon interval according to an embodiment of this application;
FIG. 2 is a schematic diagram of a communication system according to an embodiment of this application;
FIG. 3 is a schematic flowchart of a service period scheduling method according to an embodiment of this application;
FIG. 4 is a diagram of a structure of an add traffic stream request frame;
FIG. 5 is a diagram of a structure of an add block acknowledgment request frame;
FIG. 6 is a diagram of a structure of a service period request frame;
FIG. 7 is a diagram of a structure of an add traffic stream response frame;
FIG. 8 is a diagram of a structure of an add block acknowledgment response frame;
FIG. 9 is a schematic flowchart of another service period scheduling method according to an embodiment of this application;
FIG. 10 is a schematic flowchart of another service period scheduling method according to an embodiment of this application;
FIG. 11 is a schematic diagram of a structure of a directional multi-gigabit capabilities element (directional multi-gigabit capabilities element, DMG capabilities element) in an association/reassociation request frame; and
FIG. 12 is a block diagram of a service period scheduling apparatus according to an embodiment of this application.

### DESCRIPTION OF EMBODIMENTS

The following describes technical solutions of this application with reference to accompanying drawings.

The technical solutions in embodiments of this application may be applied to various communication systems such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, or a new radio (new radio, NR) system.

The technical solutions in the embodiments of this application may further be used in a wireless local area network (wireless local area network, WLAN), and the embodiments of this application is applicable to any protocol in the institute of electrical and electronics engineers (institute of electrical and electronics engineers, IEEE) 802.11 series protocols currently used for the WLAN. The WLAN may include a plurality of network nodes, for example, one or more access points (access point, AP) and one or more stations (station, STA). One STA can access only one AP (in other words, the STA is associated with the AP), and one AP can be associated with a plurality of STAs. Before performing data transmission, the STA and the AP need to perform beam training to obtain an optimal receive beam and/or an optimal transmit beam between the STA and the AP. It should be understood that, in a beam training process, usually, a party that actively initiates beam training is referred to as an initiating device, and a party that passively performs beam training is referred to as a responding device. The initiating device mentioned in the following in this specification may also be referred to as an initiator (initiator), and the responding device may also be referred to as a responder (responder). Details are not described in the following again. Specifically, the WLAN is used as an example. In the embodiments of this application, the initiating device and the responding device each are a device having a wireless communication function, and may be a user station (station, STA) in the WLAN. The user station may also be referred to as a user unit, an access terminal, a mobile station, a remote station, a remote terminal, a mobile device, a user terminal, a terminal, a wireless communication device, a user agent, a user apparatus, or user equipment (user equipment, UE). The STA may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless local area network (for example, Wi-Fi) communication function, a computing device, or another processing device connected to a wireless modem.

The initiating device and the responding device in the embodiments of this application may alternatively be a personal basic service set control point/access point (personal basic service set control point/access point, PCP/AP) in a WLAN. The PCP/AP may be configured to communicate with an access terminal through the wireless local area network, and transmit data from the access terminal to a network side, or transmit data from the network side to the access terminal.

In addition, aspects or features of this application may be implemented as a method, an apparatus, or a product that uses standard programming and/or engineering technologies. The term "product" used in this application covers a computer program that can be accessed from any computer-readable component, carrier or medium. For example, the computer-readable medium may include but is not limited to a magnetic storage component (for example, a hard disk, a floppy disk, or a magnetic tape), an optical disc (for example, a compact disc (compact disc, CD), or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a radio channel, and various other media that can store, contain, and/or carry instructions and/or data.

For ease of understanding and description, as an example instead of a limitation, the following describes an execution process and an action of a handover method and apparatus in this application in a WLAN system.

The following first describes related technologies in this application.

### 1. Beacon interval (beacon interval, BI)

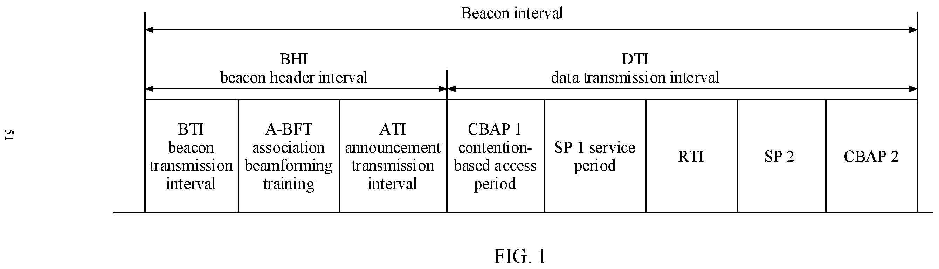

FIG. 1 is a schematic diagram of a structure of a beacon interval BI. As shown in FIG. 1, the beacon interval is divided into a beacon header indication (beacon header indication, BHI) and a data transmission interval (data transmission interval, DTI). The BHI further includes a beacon transmission interval (beacon transmission interval, BTI), association beamforming training (association beamforming training, A-BFT), and an announcement transmission interval (announcement transmission interval, ATI).

Specifically, a PCP/AP sends a plurality of beacon (beacon) frames in the BTI based on a sector number, where the beacon frames are used for downlink sector sweep. The A-BFT is used by a STA to perform association and uplink sector sweep. The ATI is used by the PCP/AP to poll the STA for buffered data information and allocate resources in the data transmission interval (data transmission interval, DTI) to the STA. The entire DTI is divided into several subintervals, and the subintervals are divided into a contention-based access period (contention-based access period, CBAP) and a service period (service period, SP) based on an access form. In the service period, scheduling transmission is performed, and contention does not need to be performed.

### 2. Beamforming training (beamforming training, BFT)

Beamforming training is also referred to as beam training, and may specifically include a sector sweep (sector sweep, SSW) phase and a sector sweep feedback (sector sweep feedback, SSW-Feedback) phase.
(1) The sector sweep phase includes an initiator sector sweep (initiator sector sweep, ISS) phase and a responder sector sweep (responder sector sweep, RSS) phase. The ISS phase is used to train a directional transmit beam of the initiator. The initiator sends training data directionally by using a beam of a specific width, and the responder receives the training data quasi-omnidirectionally. The RSS phase is used to train a directional transmit beam of the responder. The responder sends training data by using a beam of a specific width, where the training data includes information about the best sending sector of the initiator in a previous phase. In this case, the initiator receives the training data quasi-unidirectionally. The training data may be an SSW frame.
(2) In the sector sweep feedback phase, feedback information is a list of initiator transmit sectors sorted based on sector quality and includes the best sector of the responder in a previous phase. In this case, the responder is in a quasi-omnidirectional receiving mode.

An optimal receive beam and/or an optimal transmit beam between the initiator and the responder may be obtained through beamforming training.

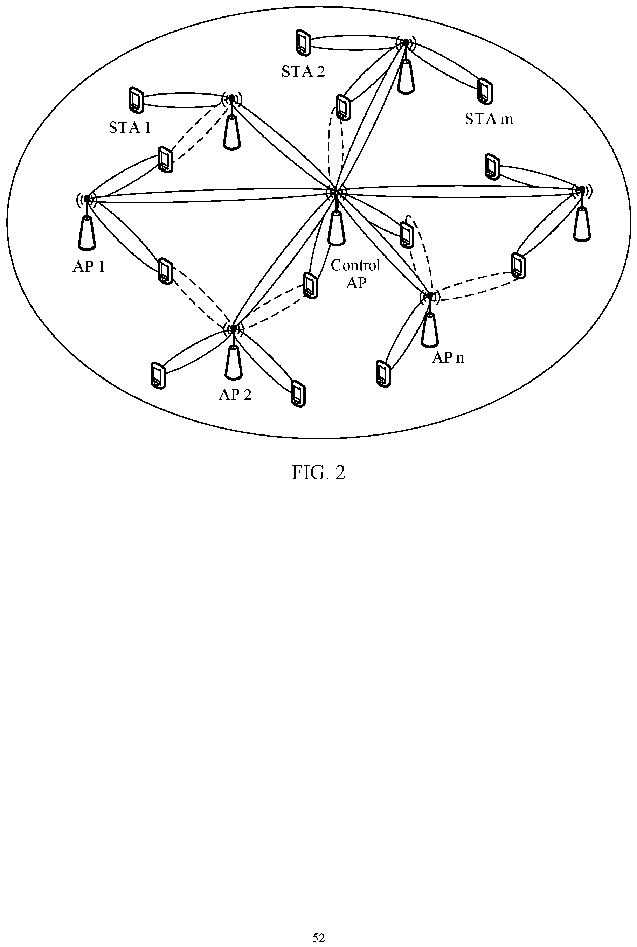

FIG. 2 is a schematic diagram of a communication system according to an embodiment of this application. As shown in FIG. 2, the communication system includes a plurality of APs. For the plurality of APs, one or more STAs further exist within coverage of all or a part of the APs. Specifically, in the communication system shown in FIG. 2, there are a total of n APs and m STAs in the communication system. Both m and n are integers greater than or equal to 1.

It should be understood that the communication system may be directed at a moving scenario, or may be directed at a non-moving scenario. In other words, the STA may be mobile, or may be fixed. Therefore, when a STA can move, a quantity of STAs within coverage of one AP may change in real time. In other words, there may be a moment at which an AP does not cover any STA. This is not limited in this embodiment of this application.

In the communication system shown in FIG. 2, when the STA moves to a service edge area of a serving-AP, strength of a signal received by the STA decreases or even communication is interrupted. A communication service may be interrupted due to movement. Consequently, communication quality degrades.

In view of this, an embodiment of this application provides a service period scheduling method, to improve data transmission reliability and communication quality.

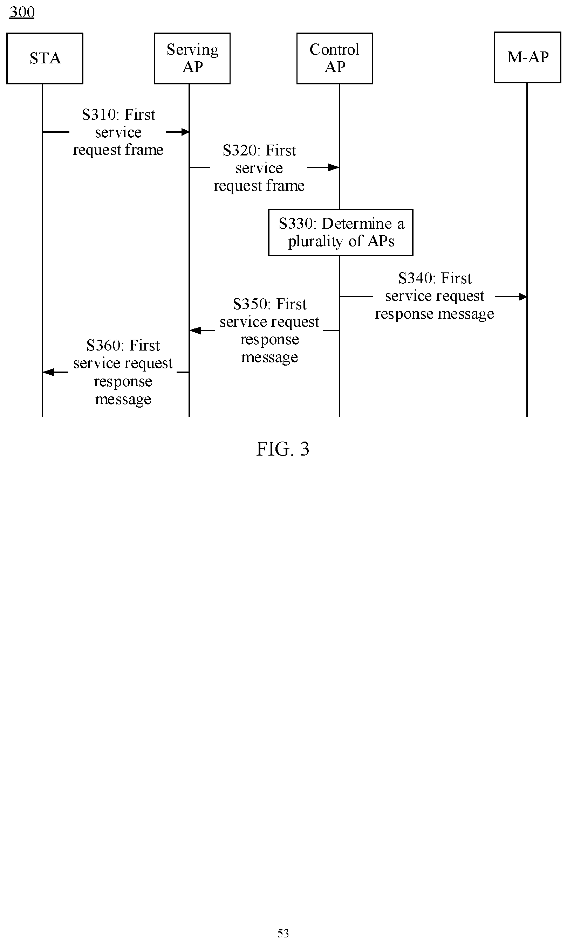

FIG. 3 is a schematic flowchart of a service period scheduling method 300 according to an embodiment of this application. The method 300 may be applied to the communication system 200 shown in FIG. 2. However, this embodiment of this application is not limited thereto.

S310: A STA sends a first service request frame to a serving-AP.

In this case, regardless of whether the serving-AP meets a quality of service requirement of the STA, the STA may directly send the first service request frame to the serving-AP, where the first service request frame is used to request a plurality of APs to serve one STA in one service period SP, to ensure a high quality of service requirement of the STA.

In an existing protocol, a STA only supports a single-AP service. Therefore, to implement a requirement that a plurality of APs simultaneously provide a service for one STA, the first service request frame needs to include a field used to request a multi-AP service, and the field used to request the multi-AP service is used to indicate the plurality of APs to serve the STA in a same time period.

It should be noted that "the field is used to indicate" should be understood as that information in the field is used for indication. For example, "the field used to request the multi-AP service is used to indicate the plurality of APs to serve the STA in a same time period" actually means that information in the field used to request the multi-AP service is used to indicate the plurality of APs to serve the STA in the same time period.

In some possible implementations, the first service request frame further includes a multi-AP operation type indication field, and the multi-AP operation type indication field is used to indicate a traffic classification when the plurality of APs serve the STA in the same time period. For example, the multi-AP operation type indication field indicates that the plurality of APs provide a data transmission service or a beam training service for the STA in the same time period, or indicates that the plurality of APs provide both a data transmission service and a beam tracking service for the STA in the same time period.

In some possible implementations, the first service request frame may be an add traffic stream request frame (add traffic stream request frame, ADDTS request frame), and correspondingly a first service response message is an add traffic stream response frame (add traffic stream response frame, ADDTS response frame).

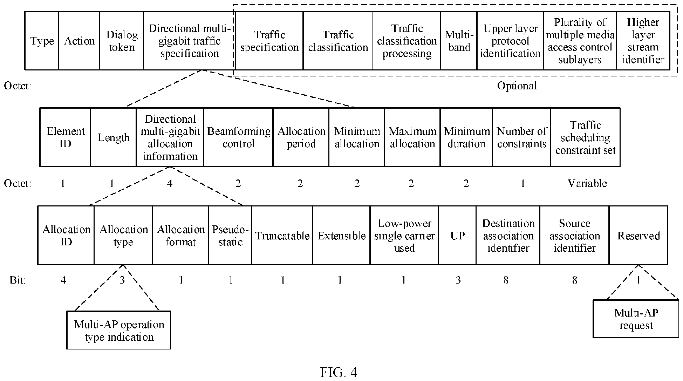

FIG. 4 is a diagram of a structure of the ADDTS request frame. As shown in FIG. 4, the ADDTS request frame may include one or a combination of more of the following information:
1. A category (category) field is used to indicate a type of a frame.
2. An action (action) field is used to specify an extended management operation.
3. A dialog token (dialog token) field is used to identify a current response to a specific request when there are a plurality of concurrent dialog requests.
4. A directional multi-gigabit traffic specification (directional multi-gigabit traffic specification, DMG TSPEC) field includes a parameter that defines an allocation and is used to indicate a traffic classification.
5. A traffic specification (Traffic specification, TSPEC) field is optional, and defines a traffic stream that can use an allocation if the allocation is successfully created.
6. A traffic classification (traffic classification, TCLAS) field is optional and can be present only when a TSPEC element is present. The traffic classification is used to identify a destination non-AP DMG STA of the ADDTS request frame and a non-PCP (PBSS control point, PCP) DMG STA of the ADDTS request frame. There may be one or more TCLAS elements in a DMG ADDTS request frame.
7. A traffic classification processing (traffic classification processing, TCLAS Processing) field is present when there are a plurality of TCLAS elements.
8. A multi-band (multi-band) element indicates a frequency band, an operation class, and a channel number to which the TS identified by the optional TSPEC element applies.
9. An upper layer protocol identification (upper layer protocol identification, U-PID) element indicates an upper layer protocol associated with the TS identified by the optional TSPEC element included in the frame.
10. A plurality of multiple media access control sublayers (multiple media access control sublayers, multiple MAC sublayers) fields are used to establish a plurality of multiple media access control sublayers link (multiple media access control sublayers link, MMSL) clusters.
11. A higher layer stream identifier (higher layer stream ID) field identifies a stream from a higher layer protocol.

The DMG TSPEC element may include one or a combination of more of the following information:
1. An element ID (element ID) field is used to identify and distinguish IDs of elements (element).
2. A length (length) field is used to indicate a length of the element.
3. A directional multi-gigabit allocation information (DMG allocation information) field is used to indicate DMG allocation information.
4. A beamforming control (beamforming control, BF control) field is used to indicate indication information related to beam training.
5. An allocation period (allocation period) field is used to indicate an information allocation period.
6. A minimum allocation (minimum allocation) field indicates a minimum allocation quantity.
7. A maximum allocation (maximum allocation) field indicates a maximum allocation quantity.
8. A minimum allocation duration (minimum duration) field indicates minimum allocation duration.
9. A number of constraints (number of constraints) field indicates a quantity of constraints.
10. A traffic scheduling constraint set (traffic scheduling constraint set) field is used to indicate a traffic scheduling set.

The directional multi-gigabit allocation information (DMG allocation information) element includes one or a combination of more of the following information:
1. An allocation ID (allocation ID) field is used to identify and distinguish IDs of allocation information.
2. An allocation type (allocation type) field is used to indicate a type of the allocation information.
3. An allocation format (allocation format) field indicates a format of the allocation information.
4. A pseudo-static (pseudo-static) field is used to indicate a pseudo-static allocation.
5. A truncatable (truncatable) field is used to indicate that a service period (service period, SP) is expected to be truncated.
6. An extensible (extensible) field indicates whether the SP is extensible.
7. A low-power single carrier used (low-power single carrier used, LP SC used) field indicates that a low-power single carrier mode is used.
8. A user priority (user priority, UP) field is used to indicate a lowest priority used for possible transmission of MSDUs with a same allocation source and a same destination traffic classification.
9. A destination association identifier (destination association identifier, Destination AID) field identifies a destination protocol.
10. A source association identifier (source association identifier, Source AID) field identifies a source protocol.
11. A reserved (reserved) field is a field that is reserved.

To implement that a plurality of APs simultaneously serve one STA, the ADDTS request frame needs to be improved. The reserved field in the DMG allocation information element in the DMG TSPEC element is defined as a multi-AP request (Multi-AP request), and is used to indicate to request the multi-AP service. In addition, a reserved combination may further needs to be used for a newly defined multi-AP operation type indication (multi-AP operation type indication) in the allocation type field in the DMG allocation information element, as shown in Table 1.

**Table 1 Allocation type**

| Bit 4 | Bit 5 | Bit 6 | Function |
|---|---|---|---|
| 0 | 0 | 0 | Service period allocation |
| 1 | 0 | 0 | Contention-based access period allocation |
| 0 | 1 | 0 | Service period allocation based on one 1.08 GHz channel |
| 1 | 1 | 0 | Contention-based access period allocation based on one 1.08 GHz channel |
| 0 | 0 | 1 | Service period in which a plurality of APs perform data transmission |
| 1 | 0 | 1 | Service period in which a plurality of APs perform beam tracking |
| 1 | 1 | 1 | Service period in which a plurality of APs perform beam tracking and data transmission |
| Others | | | Reserved |

As shown in Table 1, "001" indicates that the plurality of APs are configured to simultaneously transmit data to the STA, "101" indicates that the plurality of APs simultaneously provide a beam tracking service for the STA, and "111" indicates that the plurality of APs simultaneously transmit data to the STA and provide a beam tracking service to the STA.

It should be noted that a manner of indicating the multi-AP operation type in Table 1 is merely used as an example. During actual application, different combinations may be used to indicate different operation types, and a manner of indicating the multi-AP operation type is not limited to the manner in Table 1. For example, "011" indicates that the plurality of APs are configured to simultaneously transmit data to the STA. This is not limited in this embodiment of this application. In some possible implementations, the first service request frame may be an add block acknowledgment request frame (add block acknowledgment request frame, ADDBA request frame), and correspondingly the first service response message is an add block acknowledgment response frame (add block acknowledgment response frame, ADDBA response frame).

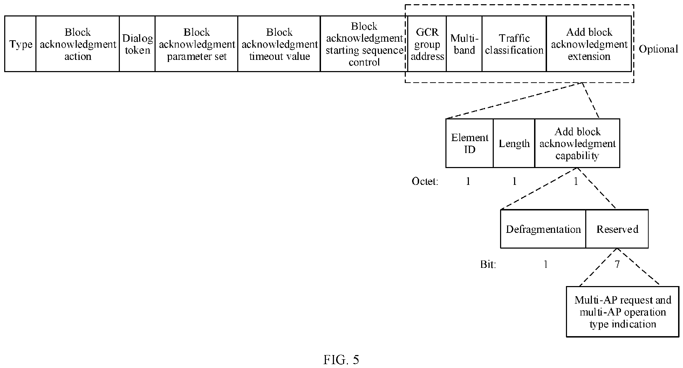

FIG. 5 is a diagram of a structure of the ADDBA request frame. As shown in FIG. 5, the ADDBA request frame may include one or a combination of more of the following information:
1. A category (category) field is used to indicate a type of the frame.
2. A block acknowledgment action (block ack action) field is used to identify a block acknowledgment action.
3. A dialog token (dialog token) field is used to identify a current response to a specific request when there are a plurality of concurrent dialog requests.
4. A block acknowledgment parameter set (block ack parameter set) field is used to signal a parameter for setting up block acknowledgment.
5. A block acknowledgment timeout value (block ack timeout value) field indicates a timeout value of block acknowledgment.
6. A block acknowledgment starting sequence control (block ack starting sequence control) field indicates a sequence number of a first MSDU or a next MSDU to be transmitted under the block acknowledgment protocol.
7. A groupcast with retries address (groupcast with retries address, GCR address) field includes a group address of a block acknowledgment protocol.
8. A multi-band (multi-band) element indicates a frequency band, an operation class, and a channel number to which a TS identified by an optional TSPEC element applies.
9. A traffic classification (traffic classification, TCLAS) field is optional and can be present only when a TSPEC element is present. The traffic classification is used to identify a destination non-AP DMG STA of the ADDTS request frame and a non-PCP (PBSS control point, PCP) DMG STA of the ADDTS request frame. There may be one or more TCLAS elements in a DMG ADDBA request frame.
10. An add block acknowledgment extension (ADDBA extension) field is used to define an extended ADDBA capability.

The ADDBA extension element may include one or a combination of more of the following information:
1. An element ID (element ID) field is used to identify and distinguish IDs of elements (element).
2. A length (length) field is used to indicate a length of the element.
3. An add block acknowledgment capabilities (ADDBA capabilities) field is used to indicate an ADDBA capability.

The ADDBA capabilities element may include one or a combination of more of the following information:
1. A defragmentation (NO-Fragmentation) field is used to determine whether a fragment MSDU can be carried in an MPDU that is sent according to the block acknowledgment protocol.
2. A reserved (reserved) field is a field that is reserved.

To implement that a plurality of APs simultaneously serve one STA, the ADDBA request frame needs to be improved. The reserved field in the ADDBA capabilities element in the ADDBA extension element is defined as a multi-AP request (Multi-AP request), and is used to indicate to request the multi-AP service and the multi-AP operation type indication (multi-AP operation type indication), as shown in Table 2.

**Table 2 Reserved field in the ADDBA capabilities element**

| Bit 1 | Bit 2 | Function | Bit 3 to bit 7 |
|---|---|---|---|
| 0 | 0 | Multi-AP request and data transmission in one SP | |
| 1 | 0 | Multi-AP request and beam tracking in one SP | |
| Others | | Reserved | |

As shown in Table 2, "00" indicates the multi-AP service request and that the plurality of APs are configured to simultaneously transmit data to the STA, and "10" indicates the multi-AP service request and that the plurality of APs simultaneously provide a beam tracking service to the STA.

It should be noted that a manner of indicating the multi-AP service request and the multi-AP operation type in Table 2 is merely used as an example. During actual application, different combinations may be used to indicate different operation types, and a manner of indicating the multi-AP service request and the multi-AP operation type is not limited to the manner in Table 2. For example, "01" indicates the multi-AP service request and that the plurality of APs are configured to simultaneously transmit data to the STA. This is not limited in this embodiment of this application.

In some possible implementations, the first service request frame may be a service period request frame (service period request frame, SPR frame), and correspondingly the first service response message is an announce frame or a grant (grant) frame.

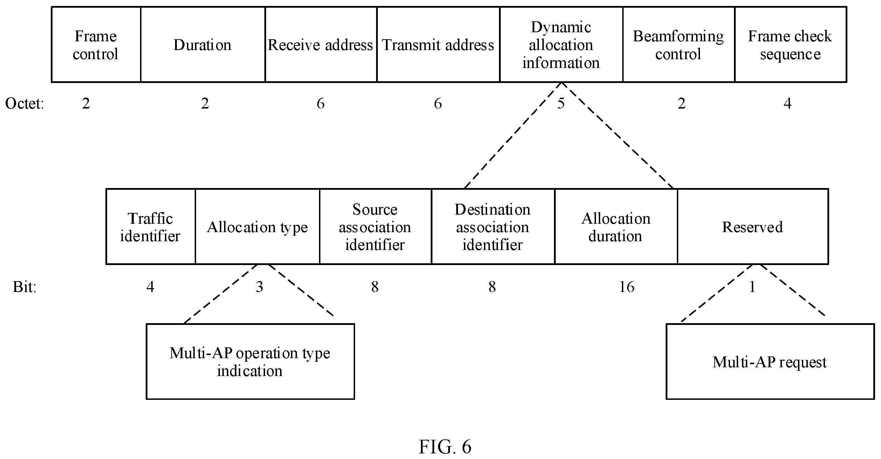

FIG. 6 is a diagram of a structure of the SPR frame. As shown in FIG. 5, the SPR frame may include one or a combination of more of the following information:
1. A frame control (frame control) field is used to identify frame control.
2. A duration (duration) field identifies requested duration.
3. A receive address (receive address, RA) field identifies a MAC address of the STA that is being polling.
4. A transmit address (transmit address, TA) field includes a MAC address of the AP or a PCP.
5. A dynamic allocation information (dynamic allocation information) field indicates allocation information.
6. A beamforming control (beamforming control) field is used to perform beamforming control.
7. A frame check sequence (frame check sequence, FCS) field is used to perform frame check.

The dynamic allocation information element may include one or a combination of more of the following information:
1. A traffic identifier (traffic identifier, TID) subfield identifies a TC or a TS for an allocation request or grant.
2. An allocation type (allocation type) subfield is used to indicate an allocation traffic classification.
3. A source association identifier (source association identifier, Source AID) subfield identifies a source protocol.
4. A destination association identifier (destination association identifier, Destination AID) subfield identifies a destination protocol.
5. An allocation duration (duration) subfield indicates requested duration in microseconds (ms).
6. A reserved (reserved) subfield is a field that is reserved.

To implement that a plurality of APs simultaneously serve one STA, the SPR frame needs to be improved. The reserved field in the dynamic allocation information element is defined as a multi-AP request (Multi-AP request), and is used to indicate to request the multi-AP service. In addition, a reserved combination may further needs to be used for a newly defined multi-AP operation type indication (multi-AP operation type indication) in the allocation type field in the dynamic allocation information element, as shown in Table 1.

In some possible implementations, the first service request frame may be a newly created frame, for example, a multi-AP request frame, or an add traffic stream request frame (add traffic stream request frame, ADDTS request frame), and correspondingly the first service response message is a multi-AP response frame.

S320: The serving-AP sends the first service request frame to a control-AP.

After receiving the first service request frame sent by the STA, the serving-AP sends the first service request frame to the control-AP.

Optionally, when the serving-AP is the control-AP, S320 may not be performed.

S330: The control-AP determines the plurality of APs.

After receiving the first service request frame, the control-AP determines, based on a requirement parameter of the STA that is included in the first service request frame, the plurality of APs that serve the STA.

For example, when the requirement parameter of the STA includes a specific traffic classification, the control-AP determines, based on the traffic classification, an AP that can support the traffic classification to serve the STA. Alternatively, the control-AP determines that a plurality of APs that are close to the STA serve the STA. A specific determining manner is not limited in this embodiment of this application.

After determining the plurality of APs that serve the STA in the same time period, the control-AP coordinates scheduling on service periods of the plurality of APs, and allocates a common SP to the STA. The plurality of APs serve the STA in the common SP.

It should be understood that one common SP may be that SPs of the plurality of APs completely overlap. During data transmission, the plurality of APs simultaneously send data to the STA. Alternatively, lengths of the service periods of the plurality of APs form a complete SP. For example, a length of the SP of the STA is 20 ms, an SP 1 that an AP 1 allocates to the STA is 0 ms to 5 ms, an SP 2 that an AP 2 allocates to the STA is 5 ms to 10 ms, an SP 3 that an AP 3 allocates to the STA is 10 ms to 20 ms, and three APs serve the STA in one SP. This is not limited in this embodiment of this application.

S340: The control-AP sends a first service request response message to the plurality of APs.

After determining the plurality of APs that serve the STA, the control-AP determines a service period of each AP through negotiation, so that the plurality of APs simultaneously serve the STA in one SP. The control-AP sends the first service request response message to each of the plurality of determined APs, where the first service request response message includes multi-AP period scheduling information, a multi-AP information element, and the like.

In some possible implementations, when the first service request frame is an ADDTS request frame, and correspondingly the first service request response message is an ADDTS response frame.

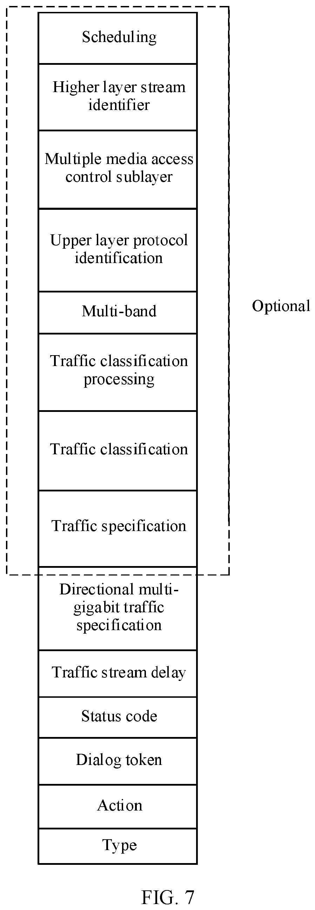

FIG. 7 is a diagram of a structure of the ADDTS response frame. As shown in FIG. 7, the ADDTS response frame may include one or a combination of more of the following information:
1. A category (category) field is used to indicate a type of the frame.
2. A block acknowledgment action (block ack action) field is used to identify a block acknowledgment action.
3. A dialog token (dialog token) field is used to identify a current response to a specific request when there are a plurality of concurrent dialog requests.
4. A status code (status code) field is used to indicate a negotiation result between the STA and the plurality of APs.
5. A traffic stream delay (traffic stream delay) field is used to indicate delay duration of a traffic stream.
6. A directional multi-gigabit traffic specification (directional multi-gigabit traffic specification, DMG TSPEC) field includes a parameter that defines an allocation and is used to indicate a traffic classification.
7. A traffic specification (Traffic specification, TSPEC) field is optional, and defines a traffic stream that can use an allocation if the allocation is successfully created.
8. A traffic classification (traffic classification, TCLAS) field is optional and can be present only when a TSPEC element is present. The traffic classification is used to identify a destination non-AP DMG STA of the ADDTS request frame and a non-PCP (PBSS control point, PCP) DMG STA of the ADDTS request frame. There may be one or more TCLAS elements in a DMG ADDTS request frame.
9. A traffic classification processing (traffic classification processing, TCLAS Processing) field is present when there are a plurality of TCLAS elements.
10. A multi-band (multi-band) element indicates a frequency band, an operation class, and a channel number to which the TS identified by the optional TSPEC element applies.
11. An upper layer protocol identification (upper layer protocol identification, U-PID) element indicates an upper layer protocol associated with the TS identified by the optional TSPEC element included in the frame.
12. A multiple media access control sublayers (multiple media access control sublayers, multiple MAC sublayers) field is used to establish an MMSL cluster.
13. A higher layer stream identifier (higher layer stream ID) field identifies a stream from a higher layer protocol.
14. A scheduling (scheduling) field is used to indicate period scheduling of the plurality of APs and the multi-AP information element.

In some possible implementations, when the first service request frame is an ADDBA request frame, and correspondingly the first service request response message is an ADDBA response frame.

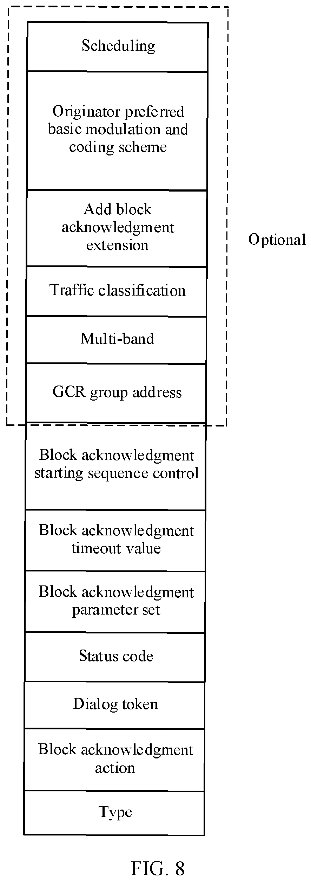

FIG. 8 is a diagram of a structure of the ADDBA response frame. As shown in FIG. 8, the ADDBA response frame may include one or a combination of more of the following information:
1. A category (category) field is used to indicate a type of the frame.
2. A block acknowledgment action (block ack action) field is used to identify a block acknowledgment action.
3. A dialog token (dialog token) field is used to identify a current response to a specific request when there are a plurality of concurrent dialog requests.
4. A status code (status code) field is used to indicate a negotiation result between the STA and the plurality of APs.
5. A block acknowledgment parameter set (block ack parameter set) field is used to signal a parameter for setting up block acknowledgment.
6. A block acknowledgment timeout value (block ack timeout value) field indicates a timeout value of block acknowledgment.
7. A groupcast with retries address (groupcast with retries address, GCR address) field includes a group address of a request block acknowledgment protocol.
8. A multi-band (multi-band) element indicates a frequency band, an operation class, and a channel number to which a TS identified by an optional TSPEC element applies.
9. A traffic classification (traffic classification, TCLAS) field is optional and can be present only when a TSPEC element is present. The traffic classification is used to identify a destination non-AP DMG STA of the ADDTS request frame and a non-PCP (PBSS control point, PCP) DMG STA of the ADDTS request frame. There may be one or more TCLAS elements in a DMG ADDBA request frame.
10. An add block acknowledgment extension (ADDBA extension) field is used to define an extended ADDBA capability.
11. An originator preferred basic modulation and coding scheme (originator preferred basic modulation and coding scheme, originator preferred MCS) field indicates a preferred MCS used for eliciting A-MPDUs from a data originator.
12. A scheduling (scheduling) field is used to indicate period scheduling of the plurality of APs and the multi-AP information element.

After determining the plurality of APs that serve the STA, the control-AP sets the status code in the first service request response message to a corresponding type. For example, "SUCCESS" indicates that negotiation between a single-AP and the STA succeeds, "REFUSE" indicates that negotiation between a single-AP and the STA is rejected, and "REFUSE_REASON_UNSPECIFIED" indicates that negotiation between a single-AP and the STA is rejected but parameter modification is recommended. The scheduling field is added to the first service request response message, where the scheduling field includes the service multi-AP period scheduling information, the multi-AP information element, and the like, and is used to indicate a period in which each of the plurality of APs serves the STA, so that the plurality of APs serve the STA in a same SP. This improves communication quality.

Alternatively, the control-AP announces the negotiation result to the plurality of APs by using the announce frame.

S350: The control-AP sends the first service request response message to the serving-AP.

The control-AP sends the negotiation result of negotiation with the plurality of APs to the serving-AP.

Optionally, when the plurality of APs determined by the control-AP include the serving-AP, step S350 may not be performed.

S360: The serving-AP sends the first service request response message to the STA.

After receiving the first service request response message sent by the control-AP, the serving-AP sends the first service request response message to the STA, to notify the STA of a corresponding scheduling result.

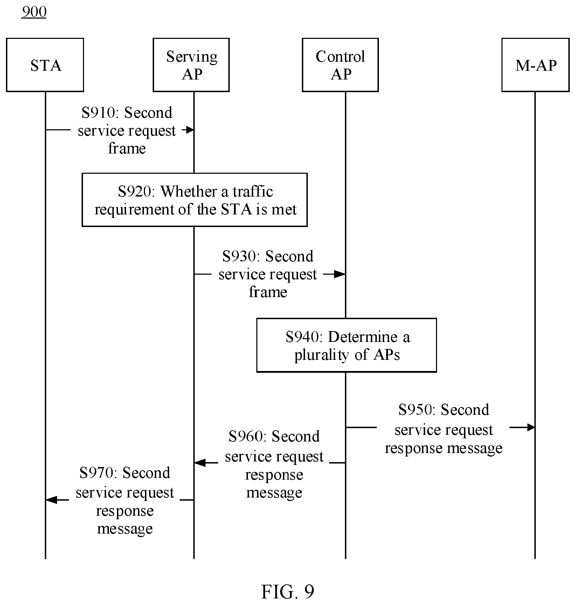

In the foregoing technical solution, the STA directly initiates a multi-AP service procedure, the serving-AP sends the first service request frame to the control-AP, and the control-AP determines the plurality of APs that serve the STA, and coordinates period scheduling of the plurality of APs, so that the plurality of APs serve the STA in the same SP, to improve communication quality. FIG. 9 is a schematic flowchart of another service period scheduling method 900 according to an embodiment of this application. The method 900 may be applied to the communication system 200 shown in FIG. 2. However, this embodiment of this application is not limited thereto.

S910: A STA sends a second service request frame to a serving-AP.

The second service request frame includes a requirement parameter of the STA, for example, a traffic classification or a frequency band requested by the STA. The second service request frame may be an ADDTS request frame, an ADDBA request frame, or an SPR frame. The second service request frame does not carry a field of a multi-AP service and a multi-AP operation type indication field.

S920: The serving-AP determines whether a traffic requirement of the STA can be met.

After receiving the second service request frame sent by the STA, the serving-AP determines, based on the requirement parameter carried in the second service request frame, whether the requirement of the STA can be met. If the requirement of the STA can be met, the serving-AP provides a corresponding service for the STA based on the requirement parameter. If the requirement of the STA cannot be met, S930 is performed.

S930: The serving-AP sends the second service request frame to a control-AP.

S940: The control-AP determines the plurality of APs.

S930 and S940 are similar to S320 and S330. For details, refer to description of S320 to S330. For brevity, details are not described herein again.

S950: The control-AP sends a second service request response message to the plurality of APs.

The second service request response message includes at least one of the following information: information indicating that negotiation between the STA and the plurality of APs succeeds; multi-AP operation type indication information; multi-AP period scheduling information; and a multi-AP information element.

For example, after determining the plurality of APs that serve the STA, the control-AP sets status code in the second service request response message to a corresponding type. For example, "SUCCESS_WITH_MULTIAP_SUPPORTED" indicates that negotiation between the plurality of APs and the STA succeeds, and is different from "SUCCESS", that is, negotiation between a single-AP and the STA succeeds.

Alternatively, the control-AP announces the negotiation result to the plurality of APs by using the announce frame.

S960: The control-AP sends the second service request response message to the serving-AP. S970: The serving-AP sends the second service request response message to the STA.

S960 and S970 are similar to S350 and S360. For details, refer to description of S350 and S360. For brevity, details are not described herein again.

In the foregoing technical solution, when the serving-AP of the STA cannot meet the traffic requirement of the STA, the serving-AP sends the second service request frame to the control-AP, and the control-AP determines the plurality of APs that serve the STA, and coordinates period scheduling of the plurality of APs, so that the plurality of APs serve the STA in a same SP, to improve communication quality.

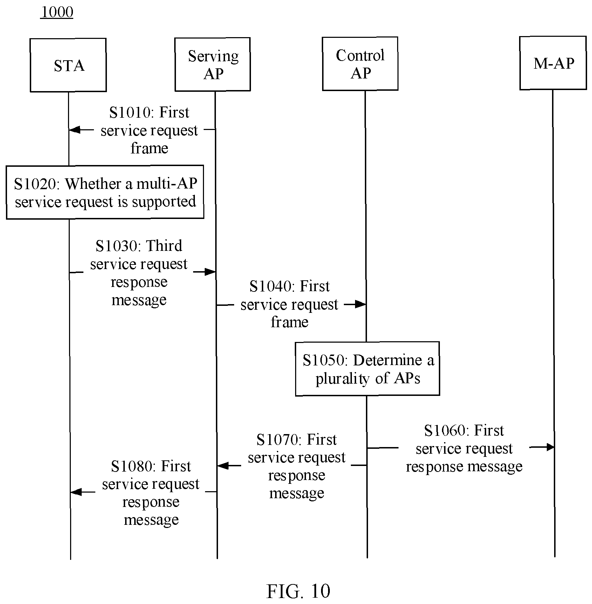

FIG. 10 is a schematic flowchart of another service period scheduling method 1000 according to an embodiment of this application. The method 1000 may be applied to the communication system 200 shown in FIG. 2. However, this embodiment of this application is not limited thereto. S1010: A serving-AP sends a first service request frame to a STA.

Regardless of whether the serving-AP of the STA can meet a traffic requirement of the STA, the serving-AP may directly initiate a multi-AP service procedure. To be specific, the serving-AP sends the first service request frame to the STA, where the first service request frame includes a field used to request a multi-AP service and a multi-AP operation type indication field, the field used to request the multi-AP service is used to indicate a plurality of APs to serve the STA in a same time period, and the multi-AP operation type indication field is used to indicate a traffic classification when the plurality of APs serve the STA in the same time period.

S1020: The STA determines whether a multi-AP service request is supported.

After receiving the first service request frame sent by the serving-AP, the STA determines whether the STA supports the multi-AP service request.

In an existing protocol, the STA does not support a multi-AP service request. To implement that the plurality of APs serve one STA, an indication indicating that the STA supports the multi-AP service request needs to be added. For example, the STA sends a first frame to the serving-AP, where the first frame includes a first field, and the first field is used to indicate that the STA can support the multi-AP service.

In some possible implementations, a field may be added to an association/reassociation request (association/reassociation request) frame sent by the STA to the AP, to indicate that the STA supports the multi-AP service.

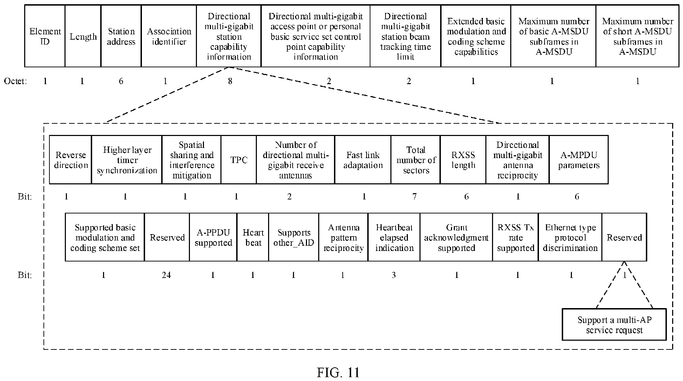

FIG. 11 is a schematic diagram of a structure of a directional multi-gigabit capabilities element (DMG capabilities element) in an association/reassociation request frame. As shown in FIG. 11, the DMG capabilities element may include one or a combination of more of the following information:
1. An element ID (element ID) field is used to identify and distinguish IDs of elements (element).
2. A length (length) field is used to indicate a length of the element.
3. A station address (STA address) field is used to indicate an address of the STA, for example, a MAC address.
4. An association identifier (association identifier, AID) field is used to indicate a protocol type.
5. A directional multi-gigabit station capability information (DMG STA capability information) field is used to indicate a DMG STA capability.
6. A directional multi-gigabit access point or personal basic service set control point capability information (DMG AP or PCP capability information) field is used to indicate a DMG AP/PCP capability.
7. A directional multi-gigabit station beam tracking time limit (DMG STA beam tracking time limit) field is used to indicate a time limit for a DMG STA to perform beam tracking.
8. An extended basic modulation and coding scheme capabilities (extended SC MCS capabilities) field is used to indicate an extended MCS capability.
9. A maximum number of basic A-MSDU subframes in A-MSDU (maximum number of basic A-MSDU subframes in A-MSDU) field is used to indicate a maximum number of basic A-MSDU subframes in an A-MSDU.
10. A maximum number of short A-MSDU subframes in A-MSDU (maximum number of short A-MSDU subframes in A-MSDU) field is used to indicate a maximum number of short A-MSDU subframes in the A-MSDU.

The DMG STA capability information element may include one or a combination of more of the following information:
1. A reverse direction (reverse direction) field indicates that a direction is a reverse direction.
2. A higher layer timer synchronization (higher layer timer synchronization) field is used to indicate higher layer timer synchronization.
3. A transmit power control (transmit power control, TPC) field is used to control transmit power.
4. A spatial sharing and interference mitigation (spatial sharing and interference mitigation, SPSH and interference mitigation) field is used to indicate whether spatial sharing and interference mitigation are supported.
5. A number of directional multi-gigabit receive antennas (number of RX DMG antennas) field is used to indicate a quantity of DMG receive antennas.
6. A fast link adaptation (fast link adaptation) field is used to indicate whether a fast link adaptation operation is supported.
7. A total number of sectors (total number of sectors) field is used to indicate a total quantity of sectors.
8. A receive sector sweep length (receive sector sweep length, RXSS length) field is used to indicate an RXSS length.
9. A directional multi-gigabit antenna reciprocity (DMG antenna reciprocity) field is used to indicate DMG antenna reciprocity.
10. An A-MPDU parameters (A-MPDU parameters) field is used to indicate an A-MPDU parameter.
11. A supported basic modulation and coding scheme set (supported MSC set) field is used to indicate a supported MCS set.
12. A reserved (reserved) field is a field that is reserved.
13. An A-PPDU supported (A-PPDU supported) field is used to indicate a supported A-PPDU.
14. A heartbeat (heartbeat) field is expected to receive from the AP or a PCP during an ATI, and is expected to receive a frame with DMG control modulation from a source DMG STA when an SP starts.
15. A supports other_AID (supports other_AID) field is used to indicate that another protocol identifier is supported.
16. An antenna pattern reciprocity (antenna pattern reciprocity) field is used to indicate antenna pattern reciprocity.
17. A heartbeat elapsed indication (heartbeat elapsed indication) field is used to calculate a value of heartbeat elapsed time.
18. A grant acknowledgment supported (grant ack supported) field is used to indicate supported grant acknowledgment.
19. A receive SSW frame transmit rate supported (RXSS transmit rate supported, RXSS Txrate supported) field is used to perform an RXSS with an SSW frame transmitted at an MCS 1 of DMG single carrier modulation.
20. An Ethernet type protocol discrimination (Ethernet type protocol discrimination, EPD) field is used to identify an Ethernet type protocol.
21. A reserved (reserved) field is a field that is reserved.

To implement that the STA supports the multi-AP service request, a reserved field in the DMG STA capability information element in the association/reassociation request frame may be used to indicate that the STA supports the multi-AP service request. For example, when the field is "1", it indicates that the STA supports the multi-AP service request. When the field is "0", it indicates that the STA does not support the multi-AP service request.

After the STA receives the first service request frame, if the STA supports the multi-AP service request, S1030 is performed.

S1030: The STA sends a third service request response message to the serving-AP.

The third service request response message includes indication information indicating that the STA supports the multi-AP service request.

S1040: The serving-AP sends the first service request frame to a control-AP.

S1050: The control-AP determines the plurality of APs.

S1060: The control-AP sends a first service request response message to the plurality of APs. S1070: The control-AP sends the first service request response message to the serving-AP.

S1080: The serving-AP sends the first service request response message to the STA.

S1040 to S1080 are similar to S320 to S360. For details, refer to description of S320 to S360. For brevity, details are not described herein again.

In the foregoing technical solution, regardless of whether the serving-AP can meet the traffic requirement of the STA, if the STA supports the multi-AP service, the serving-AP may directly initiate a multi-AP service procedure, so that the plurality of APs serve one STA in a same SP, to enrich the procedure and improve communication quality.

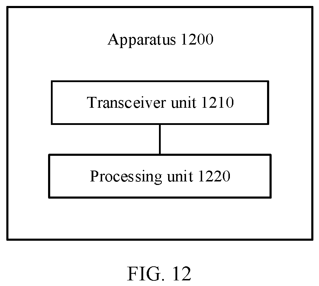

The foregoing describes in detail the service period scheduling method in the embodiments of this application with reference to FIG. 1 to FIG. 11. The following describes in detail a service period scheduling apparatus in the embodiments of this application with reference to FIG. 12.

FIG. 12 shows a service period scheduling apparatus 1200 according to an embodiment of this application. The apparatus 1200 includes a transceiver unit 1210 and a processing unit 1220. The transceiver unit 1210 may further include a sending unit and a receiving unit.

In a possible design, the apparatus 1200 is configured to implement procedures and steps corresponding to the station STA in the foregoing method embodiments.

The transceiver unit 1210 is configured to send a first service request frame to a serving-access point AP, where the first service request frame includes a field used to request a multi-AP service, and the field used to request the multi-AP service is used to indicate a plurality of APs to serve a station STA in a same time period.

Optionally, the transceiver unit 1210 is further configured to receive a first service request response message, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA.

In some possible implementations, the first service request frame further includes a multi-AP operation type indication field, and the multi-AP operation type indication field is used to indicate a traffic classification when the plurality of APs serve the STA in the same time period.

In some possible implementations, the first service request frame is any one of the following: an add traffic stream request frame; an add block acknowledgment request frame; a service period request frame; and a multi-AP service request frame.

When the first service request frame is an add traffic stream request frame, a reserved field in the add traffic stream request frame is used to indicate to request the multi-AP service, and an allocation type field in the add traffic stream request frame is used to indicate a multi-AP operation type.

Alternatively, when the first service request frame is an add block acknowledgment request frame, a reserved field in the add block acknowledgment request frame is used to indicate to request the multi-AP service and/or a multi-AP operation type.

Alternatively, when the first service request frame is a service period request frame, a reserved field in a dynamic allocation information element in the service period request frame is used to indicate to request the multi-AP service, and an allocation type field in the dynamic allocation information element is used to indicate a multi-AP operation type.

In some possible implementations, the multi-AP service request frame is a predefined frame.

Optionally, the transceiver unit 1210 is further configured to send a first frame, where the first frame includes a first field, and the first field is used to indicate that the STA can support the multi-AP service.

It should be understood that the service period scheduling apparatus 1200 provided in this embodiment of this application is the STA in the foregoing method, and the apparatus 1200 has any function of the STAin the foregoing method. For specific details, refer to the foregoing method. Details are not described herein again.

In another possible design, the apparatus 1200 is configured to implement procedures and steps corresponding to the serving-AP in the foregoing method embodiments.

The transceiver unit 1210 is configured to send a first service request frame to a control-access point AP, where the first service request frame includes a field used to request a multi-access point AP service, and the field used to request the multi-AP service is used to indicate a plurality of APs to serve a station STA in a same time period.

The transceiver unit 1210 is further configured to receive a first service request response message sent by the control-AP, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA.

The transceiver unit 1210 is further configured to send the first service request response message to the STA.

In some possible implementations, the first service request frame further includes a multi-AP operation type indication field, and the multi-AP operation type indication field is used to indicate a traffic classification when the plurality of APs serve the STA in the same time period.

In some possible implementations, the first service request frame is any one of the following: an add traffic stream request frame; an add block acknowledgment request frame; a service period request frame; and a multi-AP service request frame.

When the first service request frame is an add traffic stream request frame, a reserved field in the add traffic stream request frame is used to indicate to request the multi-AP service, and an allocation type field in the add traffic stream request frame is used to indicate a multi-AP operation type.

Alternatively, when the first service request frame is an add block acknowledgment request frame, a reserved field in the add block acknowledgment request frame is used to indicate to request the multi-AP service and/or a multi-AP operation type.

Alternatively, when the first service request frame is a service period request frame, a reserved field in a dynamic allocation information element in the service period request frame is used to indicate to request the multi-AP service, and an allocation type field in the dynamic allocation information element is used to indicate a multi-AP operation type.

In some possible implementations, the multi-AP service request frame is a predefined frame. Optionally, the transceiver unit 1210 is further configured to receive the first service request frame sent by the STA.

Optionally, the transceiver unit 1210 is further configured to receive a second service request frame sent by the STA, where the second service request frame includes a requirement parameter of the STA, and the STA supports the multi-AP service.

Optionally, the processing unit 1220 is configured to determine, based on the requirement parameter of the STA, that a serving-AP does not meet a traffic requirement of the STA. Optionally, the transceiver unit 1210 is further configured to send the second service request frame to the control-AP.

Optionally, the transceiver unit 1210 is further configured to receive a second service request response message sent by the control-AP, where the second service request response message includes at least one of the following information: information indicating that negotiation between the STA and the plurality of APs succeeds; multi-AP operation type indication information; the multi-AP period scheduling information; and the multi-AP information element.

Optionally, the transceiver unit 1210 is further configured to send the first service request frame to the STA, where the STA supports the multi-AP service.

Optionally, the transceiver unit 1210 is further configured to receive a third service response message sent by the STA, where the third service response message includes information indicating that the STA receives a multi-AP service request.

It should be understood that the service period scheduling apparatus 1200 provided in this embodiment of this application is the serving-AP in the foregoing method, and the apparatus 1200 has any function of the serving-AP in the foregoing method. For specific details, refer to the foregoing method. Details are not described herein again.

In another possible design, the apparatus 1200 is configured to implement procedures and steps corresponding to the control-AP in the foregoing method embodiments.

The transceiver unit 1210 is configured to receive a first service request frame sent by a serving-access point AP, where the first service request frame includes a field used to request a multi-AP service, and the field used to request the multi-AP service is used to indicate a plurality of APs to serve a station STA in a same time period.

The processing unit 1220 is configured to determine the plurality of APs that serve the STA.

The transceiver unit 1210 is further configured to send a first service request response message to the plurality of APs, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA.

In some possible implementations, the first service request frame further includes a multi-AP operation type indication field, and the multi-AP operation type indication field is used to indicate a traffic classification when the plurality of APs serve the STA in the same time period.

In some possible implementations, the first service request frame is any one of the following: an add traffic stream request frame; an add block acknowledgment request frame; a service period request frame; and a multi-AP service request frame.

When the first service request frame is an add traffic stream request frame, a reserved field in the add traffic stream request frame is used to indicate to request the multi-AP service, and an allocation type field in the add traffic stream request frame is used to indicate a multi-AP operation type.

Alternatively, when the first service request frame is an add block acknowledgment request frame, a reserved field in the add block acknowledgment request frame is used to indicate to request the multi-AP service and/or a multi-AP operation type.

Alternatively, when the first service request frame is a service period request frame, a reserved field in a dynamic allocation information element in the service period request frame is used to indicate to request the multi-AP service, and an allocation type field in the dynamic allocation information element is used to indicate a multi-AP operation type.

In some possible implementations, the multi-AP service request frame is a predefined frame.

It should be understood that the service period scheduling apparatus 1200 provided in this embodiment of this application is the control-AP in the foregoing method, and the apparatus 1200 has any function of the control-AP in the foregoing method. For specific details, refer to the foregoing method. Details are not described herein again.

It should be understood that, the apparatus 1200 herein is presented in a form of a function unit. The term "unit" herein may refer to an application-specific integrated circuit (application-specific integrated circuit, ASIC), an electronic circuit, a processor (for example, a shared processor, a special purpose processor, or a group processor) configured to execute one or more software or firmware programs, a memory, a logic merging circuit, and/or another appropriate component that supports the described function. In an optional example, a person skilled in the art may understand that the apparatus 1200 may specifically be the station STA, the serving-AP, or the control-AP in the foregoing embodiments, and the apparatus 1200 may be configured to perform procedures and/or steps corresponding to the station STA, the serving-AP, or the control-AP in the foregoing method embodiments. To avoid repetition, details are not described herein again.

The apparatus 1200 in the foregoing solutions may have functions to implement corresponding steps performed by the station STA, the serving-AP, or the control-AP. The functions may be implemented by hardware, or may be implemented by hardware by executing corresponding software. The hardware or the software includes one or more modules corresponding to the foregoing functions. For example, the sending unit may be replaced with a transmitter, the receiving unit may be replaced with a receiver, and another unit such as a determining unit may be replaced with a processor, to respectively perform a sending operation, a receiving operation, and a related processing operation in the method embodiments.

In this embodiment of this application, the apparatus in FIG. 12 may be the station STA, the serving-AP, or the control-AP in the foregoing embodiments, or may be a chip or a chip system, for example, a system on chip (system on chip, SoC). Correspondingly, the receiving unit and the sending unit may be a transceiver circuit of the chip. This is not limited herein.

The foregoing describes the service period scheduling apparatus applied to the station STA, the service period scheduling apparatus applied to the serving-AP, and the service period scheduling apparatus applied to the control-AP. The following describes possible product forms of the service period scheduling apparatus applied to the station STA, the service period scheduling apparatus applied to the serving-AP, and the service period scheduling apparatus applied to the control-AP.

It should be understood that any product having features of the service period scheduling apparatus applied to the station STA, the service period scheduling apparatus applied to the serving-AP, and the service period scheduling apparatus applied to the control-AP that are described in FIG. 12 falls within the protection scope of this application. It should further be understood that the following description is merely an example, and the product forms of the service period scheduling apparatus applied to the station STA, the service period scheduling apparatus applied to the serving-AP, and the service period scheduling apparatus applied to the control-AP in this embodiment of this application are not limited thereto.

As a possible product form, the service period scheduling apparatus applied to the station STA, the service period scheduling apparatus applied to the serving-AP, and the service period scheduling apparatus applied to the control-AP may be implemented by using general bus architectures.

The service period scheduling apparatus applied to the station STA includes a processor and a transceiver that is internally connected to and communicates with the processor. The transceiver is configured to: send a first service request frame to a serving-access point AP, where the first service request frame includes a field used to request a multi-AP service, and the field used to request the multi-AP service is used to indicate a plurality of APs to serve a station STA in a same time period; and receive a first service request response message, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA. Optionally, the service period scheduling apparatus applied to the station STA may further include a memory, and the memory is configured to store instructions executed by the processor.

The service period scheduling apparatus applied to the serving-AP includes a processor and a transceiver that is internally connected to and communicates with the processor. The transceiver is configured to: send a first service request frame to a control-access point AP, where the first service request frame includes a field used to request a multi-access point AP service, and the field used to request the multi-AP service is used to indicate a plurality of APs to serve a station STA in a same time period; receive a first service request response message sent by the control-AP, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA; and send the first service request response message to the STA. Optionally, the service period scheduling apparatus applied to the serving-AP may further include a memory, and the memory is configured to store instructions executed by the processor.

The service period scheduling apparatus applied to the control-AP includes a processor and a transceiver that is internally connected to and communicates with the processor. The transceiver is configured to receive a first service request frame sent by a serving-access point AP, where the first service request frame includes a field used to request a multi-AP service, and the field used to request the multi-AP service is used to indicate a plurality of APs to serve a station STA in a same time period. The processor is configured to determine the plurality of APs that serve the STA. The transceiver is further configured to send a first service request response message to the plurality of APs, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA. Optionally, the service period scheduling apparatus applied to the control-AP may further include a memory, and the memory is configured to store instructions executed by the processor. As a possible product form, the service period scheduling apparatus applied to the station STA, the service period scheduling apparatus applied to the serving-AP, and the service period scheduling apparatus applied to the control-AP may be implemented by using general-purpose processors.

The general-purpose processor used to implement the service period scheduling apparatus applied to the station STA includes a processing circuit and a communication interface that is internally connected to and communicates with the processing circuit. The communication interface is configured to: send a first service request frame to a serving-access point AP, where the first service request frame includes a field used to request a multi-AP service, and the field used to request the multi-AP service is used to indicate a plurality of APs to serve a station STA in a same time period; and receive a first service request response message, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA. Optionally, the general-purpose processor may further include a storage medium, and the storage medium is configured to store instructions executed by the processing circuit.

The general-purpose processor used to implement the service period scheduling apparatus applied to the serving-AP includes a processing circuit and a communication interface that is internally connected to and communicates with the processing circuit. The communication interface is configured to: send a first service request frame to a control-access point AP, where the first service request frame includes a field used to request a multi-access point AP service, and the field used to request the multi-AP service is used to indicate a plurality of APs to serve a station STA in a same time period; receive a first service request response message sent by the control-AP, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA; and send the first service request response message to the STA. Optionally, the general-purpose processor may further include a storage medium, and the storage medium is configured to store instructions executed by the processing circuit.

The general-purpose processor used to implement the service period scheduling apparatus applied to the control-AP includes a processing circuit and a communication interface that is internally connected to and communicates with the processing circuit. The communication interface is configured to receive a first service request frame sent by a serving-access point AP, where the first service request frame includes a field used to request a multi-AP service, and the field used to request the multi-AP service is used to indicate a plurality of APs to serve a station STA in a same time period. The processing circuit is configured to determine the plurality of APs that serve the STA. The communication interface is further configured to send a first service request response message to the plurality of APs, where the first service response message includes multi-AP period scheduling information and/or a multi-AP information element, the multi-AP period scheduling information is used to indicate a service period in which each of the plurality of APs provides a service for the STA, and the multi-AP information element is used to indicate the AP that provides the service for the STA. Optionally, the general-purpose processor may further include a storage medium, and the storage medium is configured to store instructions executed by the processing circuit.

As a possible product form, the service period scheduling apparatus applied to the station STA, the service period scheduling apparatus applied to the serving-AP, and the service period scheduling apparatus applied to the control-AP may further be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that various product forms of the service period scheduling apparatus applied to the station STA, the service period scheduling apparatus applied to the serving-AP, and the service period scheduling apparatus applied to the control-AP separately has any function of the station STA, the serving-AP, and the control-AP in the foregoing method embodiments. Details are not described herein again.

It should be understood that in the embodiments of this application, the processor in the foregoing apparatus may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or a transistor logic device, a discrete hardware component, or the like. The general-purpose processor may be a microprocessor, or the processor may be any conventional processor or the like.

In an implementation process, steps in the foregoing methods can be implemented by using a hardware integrated logic circuit in the processor, or by using instructions in a form of software. The steps of the method disclosed with reference to the embodiments of this application may be directly performed by a hardware processor, or may be performed by using a combination of hardware and a software unit that are in a processor. The software unit may be located in a mature storage medium in the art, such as a random access memory, a flash memory, a read-only memory, a programmable read-only memory, an electrically erasable programmable memory, a register, or the like. The storage medium is located in the memory, and the processor executes the instructions in the memory and completes the steps in the foregoing method in combination with hardware of the processor. To avoid repetition, details are not described herein again.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" usually represents an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

A person of ordinary skill in the art may be aware that, in combination with the examples described in the embodiments disclosed in this specification, method steps and units can be implemented by electronic hardware, computer software, or a combination thereof. To clearly describe the interchangeability between the hardware and the software, the foregoing has generally described steps and composition of each embodiment based on functions. Whether the functions are performed by hardware or software depends on particular applications and design constraints of the technical solutions. A person of ordinary skill in the art may use different methods to implement the described functions for each particular application, but it should not be considered that the implementation goes beyond the scope of this application.

It may be clearly understood by a person skilled in the art that, for ease of convenience and brevity, for a detailed working process of the foregoing system, apparatus, and unit, refer to a corresponding process in the foregoing method embodiments, and details are not repeatedly described herein.

In the several embodiments provided in this application, it should be understood that the disclosed system, apparatus, and method may be implemented in another manner. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or the communication connections between the apparatuses or the units may be implemented in an electrical form, a mechanical form, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments of this application.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, a network device, or the like) to perform all or a part of the steps of the methods described in the embodiments of this application. The foregoing storage medium includes any medium that can store program instructions, for example, a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application, the scope of the invention is defined by the appended claims. Any modification or replacement readily figured out by a person skilled in the art within the technical scope disclosed in this application shall fall within the protection scope of this application, as long as they do not depart from the scope of the invention as it is depicted by the appended claims. Therefore, the protection scope of this application shall be subject to the protection scope of the claims.

## Claims

1. A service period scheduling method, comprising:
sending (S310), by a station STA, a first service request frame to a serving-access point, AP, wherein the first service request frame comprises a field used to request a multi-AP service, and the field used to request the multi-AP service is used to indicate a plurality of APs to serve the STA in a same time period; and
receiving (S360), by the STA, a first service request response message from the serving-AP, wherein the first service response message comprises multi-AP period scheduling information and a multi-AP information element, the multi-AP period scheduling information is used to indicate a service period in which each of the plurality of APs provides a service for the STA, and the multi-AP information element is used to indicate the AP that provides the service for the STA; and
**characterised in that** the first service request frame further comprises a multi-AP operation type indication field, and the multi-AP operation type indication field is used to indicate a traffic classification when the plurality of APs serve the STA in the same time period, the traffic classification indicating the plurality of APs are to provide one or both of a data transmission service and a beam training service for the STA in the same time period.

2. The method according to claim 1, wherein the first service request frame is any one of the following:
an add traffic stream request frame;
an add block acknowledgment request frame;
a service period request frame; and
a multi-AP service request frame.

3. A service period scheduling method, further comprising:
receiving (S310), by a serving-access point AP, a first service request frame from a station STA, wherein the first service request frame comprises a field used to request a multi-AP service, and the field used to request the multi-AP service is used to indicate a plurality of APs to serve the STA in a same time period, and wherein the first service request frame further comprises a multi-AP operation type indication field, and the multi-AP operation type indication field is used to indicate a traffic classification when the plurality of APs serve the STA in the same time period, the traffic classification indicating the plurality of APs are to provide one or both of a data transmission service and a beam training service for the STA in the same time period;
sending (S320), by the serving-AP the first service request frame to a control-access point AP, wherein the first service request frame comprises a field used to request a multi-access point AP service, and the field used to request the multi-AP service is used to indicate a plurality of APs to serve a station STA in the same time period;
receiving (S350), by the serving-AP, a first service request response message sent by the control-AP, wherein the first service response message comprises multi-AP period scheduling information and a multi-AP information element, the multi-AP period scheduling information is used to indicate a service period in which each of the plurality of APs provides a service for the STA, and the multi-AP information element is used to indicate the AP that provides the service for the STA; and
sending (S360), by the serving-AP, the first service request response message to the STA.

4. The method according to claim 3, wherein the first service request frame is any one of the following:
an add traffic stream request frame;
an add block acknowledgment request frame;
a service period request frame; and
a multi-AP service request frame.

5. The method according to claim 3 or 4, wherein before the sending a first service request frame to a control-access point, the method further comprises:
receiving (S310) the first service request frame sent by the STA.

6. The method according to any one of claims 3 to 5, further comprising:
receiving (S320), by the control-access point AP, a first service request frame sent by the serving-access point AP, wherein the first service request frame comprises a field used to request a multi-AP service, and the field used to request the multi-AP service is used to indicate a plurality of APs to serve a station STA in a same time period;
determining (S330), by the control-AP, the plurality of APs that serve the STA based on a requirement parameter of the STA that is included in the first service request frame; and
sending (S340), by the control-AP, a first service request response message to the plurality of APs, wherein the first service response message comprises multi-AP period scheduling information and a multi-AP information element, the multi-AP period scheduling information is used to indicate a service period in which each of the plurality of APs provides a service for the STA, and the multi-AP information element is used to indicate the AP that provides the service for the STA.

7. The method according toclaim 6, wherein when the first service request frame is an add traffic stream request frame, a reserved field in the add traffic stream request frame is used to indicate to request the multi-AP service, and an allocation type field in the add traffic stream request frame is used to indicate a multi-AP operation type.

8. An apparatus, configured to perform the method performed by the STA according to claim 1 or 2, or configured to perform the method performed by the serving-AP according to any one of claims 3 to 5.

9. A computer-readable medium, configured to store a computer program, wherein the computer program comprises instructions used to implement the method performed by the STA according to claim 1 or 2, or the method performed by the serving-AP according to any one of claims 3 to 5.

10. A computer program product, wherein the computer program product comprises computer program instructions, and when the computer program instructions are run on a computer, the computer is enabled to implement the method performed by the STA according to claim 1 or 2, or the method performed by the serving-AP according to any one of claims 3 to 5.

## Patentansprüche

1. Dienstzeitraumplanungsverfahren, umfassend:
Senden (S310), durch eine Station, STA, eines ersten Dienstanforderungsrahmens an einen Bedienungszugriffspunkt, Bedienungs-AP, wobei der erste Dienstanforderungsrahmen ein Feld umfasst, das dazu verwendet wird, einen Dienst mehrerer APs anzufordern, und das Feld, das dazu verwendet wird, den Dienst mehrerer APs anzufordern, dazu verwendet wird, einer Vielzahl von APs anzugeben, die STA in einem gleichen Zeitraum zu bedienen; und
Empfangen (S360), durch die STA, einer ersten Dienstanforderungsantwortnachricht von dem Bedienungs-AP, wobei die erste Dienstantwortnachricht Zeitraumplanungsinformationen mehrerer APs und ein Informationselement mehrerer APs umfasst, die Zeitraumplanungsinformationen mehrerer APs dazu verwendet werden, einen Dienstzeitraum anzugeben, in dem jeder der Vielzahl von APs einen Dienst für die STA bereitstellt, und das Informationselement mehrerer APs dazu verwendet wird, den AP anzugeben, der den Dienst für die STA bereitstellt; und
**dadurch gekennzeichnet, dass** der erste Dienstanforderungsrahmen ferner ein Vorgangsartangabefeld mehrerer APs umfasst und das Vorgangsartangabefeld mehrerer APs dazu verwendet wird, eine Verkehrseinordnung anzugeben, wenn die Vielzahl von APs die STA in dem gleichen Zeitraum bedient, wobei die Verkehrseinordnung angibt, dass die Vielzahl von APs einen oder beide eines Datenübertragungsdiensts und eines Strahltrainingsdiensts für die STA in dem gleichen Zeitraum bereitzustellen hat.

2. Verfahren nach Anspruch 1, wobei der erste Dienstanforderungsrahmen einer der folgenden ist:
eines Verkehrsstromhinzufügungsanforderungsrahmens;
eines Blockhinzufügungsbestätigungsanforderungsrahmens;
eines Dienstzeitraumanforderungsrahmens; und
eines Dienstanforderungsrahmens mehrerer APs.

3. Dienstzeitraumplanungsverfahren, ferner umfassend:
Empfangen (S310), durch einen Bedienungszugriffspunkt, Bedienungs-AP, eines ersten Dienstanforderungsrahmens von einer Station, STA, wobei der erste Dienstanforderungsrahmen ein Feld umfasst, das dazu verwendet wird, einen Dienst mehrerer APs anzufordern, und das Feld, das dazu verwendet wird, den Dienst mehrerer APs anzufordern, dazu verwendet wird, einer Vielzahl von APs anzugeben, die STA in einem gleichen Zeitraum zu bedienen, und wobei der erste Dienstanforderungsrahmen ferner ein Vorgangsartangabefeld mehrerer APs umfasst und das Vorgangsartangabefeld mehrerer APs dazu verwendet wird, eine Verkehrseinordnung anzugeben, wenn die Vielzahl von APs die STA in dem gleichen Zeitraum bedient, wobei die Verkehrseinordnung angibt, dass die Vielzahl von APs einen oder beide eines Datenübertragungsdiensts und eines Strahltrainingsdiensts für die STA in dem gleichen Zeitraum bereitzustellen hat;
Senden (S320), durch den Bedienungs-AP, des ersten Dienstanforderungsrahmens an einen Steuerungszugriffspunkt, Steuerungs-AP, wobei der erste Dienstanforderungsrahmen ein Feld umfasst, das dazu verwendet wird, einen Dienst mehrerer Zugriffspunkte, Dienst mehrerer APs, anzufordern, und das Feld, das dazu verwendet wird, den Dienst mehrerer APs anzufordern, dazu verwendet wird, einer Vielzahl von APs anzugeben, eine Station, STA, in dem gleichen Zeitraum zu bedienen;
Empfangen (S350), durch den Bedienungs-AP, einer ersten Dienstanforderungsantwortnachricht, die durch die Steuerungs-AP gesendet wird, wobei die erste Dienstantwortnachricht Zeitraumplanungsinformationen mehrerer APs und ein Informationselement mehrerer APs umfasst, die Zeitraumplanungsinformationen mehrerer APs dazu verwendet werden, einen Dienstzeitraum anzugeben, in dem jeder der Vielzahl von APs einen Dienst für die STA bereitstellt, und das Informationselement mehrerer APs dazu verwendet wird, den AP anzugeben, der den Dienst für die STA bereitstellt; und
Senden (S360), durch den Bedienungs-AP, der ersten Dienstanforderungsantwortnachricht an die STA.

4. Verfahren nach Anspruch 3, wobei der erste Dienstanforderungsrahmen einer der folgenden ist:
eines Verkehrsstromhinzufügungsanforderungsrahmens;
eines Blockhinzufügungsbestätigungsanforderungsrahmens;
eines Dienstzeitraumanforderungsrahmens; und
eines Dienstanforderungsrahmens mehrerer APs.

5. Verfahren nach Anspruch 3 oder 4, wobei das Verfahren vor dem Senden eines ersten Dienstanforderungsrahmens an einen Steuerungszugriffspunkt ferner Folgendes umfasst:
Empfangen (S310) des ersten Dienstanforderungsrahmens, der durch die STA gesendet wird.

6. Verfahren nach einem der Ansprüche 3 bis 5, ferner umfassend:
Empfangen (S320), durch den Steuerungszugriffspunkt, Steuerungs-AP, eines ersten Dienstanforderungsrahmens, der durch den Bedienungszugriffspunkt, Bedienungs-AP, gesendet wird, wobei der erste Dienstanforderungsrahmen ein Feld umfasst, das dazu verwendet wird, einen Dienst mehrerer APs anzufordern, und das Feld, das dazu verwendet wird, den Dienst mehrerer APs anzufordern, dazu verwendet wird, einer Vielzahl von APs anzugeben, eine Station, STA, in einem gleichen Zeitraum zu bedienen;
Bestimmen (S330), durch den Steuerungs-AP, der Vielzahl von APs, welche die STA bedienen, basierend auf einem Erfordernisparameter der STA, der in dem ersten Dienstanforderungsrahmen beinhaltet ist; und
Senden (S340), durch den Steuerungs-AP, einer ersten Dienstanforderungsantwortnachricht an die Vielzahl von APs, wobei die erste Dienstantwortnachricht Zeitraumplanungsinformationen mehrerer APs und ein Informationselement mehrerer APs umfasst, die Zeitraumplanungsinformationen mehrerer APs dazu verwendet werden, einen Dienstzeitraum anzugeben, in dem jeder der Vielzahl von APs einen Dienst für die STA bereitstellt, und das Informationselement mehrerer APs dazu verwendet wird, den AP anzugeben, der den Dienst für die STA bereitstellt.

7. Verfahren nach Anspruch 6, wobei, wenn der erste Dienstanforderungsrahmen ein Verkehrsstromhinzufügungsanforderungsrahmen ist, ein reserviertes Feld in dem Verkehrsstromhinzufügungsanforderungsrahmen dazu verwendet wird, anzugeben, den Dienst mehrerer APs anzufordern, und ein Zuweisungsartfeld in dem Verkehrsstromhinzufügungsanforderungsrahmen dazu verwendet wird, eine Vorgangsart mehrerer APs anzugeben.

8. Vorrichtung, die dazu konfiguriert ist, das Verfahren, das durch die STA nach Anspruch 1 oder 2 durchgeführt wird, durchzuführen, oder dazu konfiguriert ist, das Verfahren, das durch den Bedienungs-AP nach einem der Ansprüche 3 bis 5 durchgeführt wird, durchzuführen.

9. Computerlesbares Medium, das dazu konfiguriert ist, ein Computerprogramm zu speichern, wobei das Computerprogramm Anweisungen umfasst, die dazu verwendet werden, das Verfahren, das durch die STA nach Anspruch 1 oder 2 durchgeführt wird, oder das Verfahren, das durch den Bedienungs-AP nach einem der Ansprüche 3 bis 5 durchgeführt wird, umzusetzen.

10. Computerprogrammprodukt, wobei das Computerprogrammprodukt Computerprogrammanweisungen umfasst und, wenn die Computerprogrammanweisungen auf einem Computer ausgeführt werden, es dem Computer ermöglicht wird, das Verfahren, das durch die STA nach Anspruch 1 oder 2 durchgeführt wird, oder das Verfahren, das durch den Bedienungs-AP nach einem der Ansprüche 3 bis 5 durchgeführt wird, umzusetzen.

## Revendications

1. Procédé de planification de période de service, comprenant :
l'envoi (S310), par une station STA, d'une première trame de requête de service à un point d'accès, AP, de desserte dans lequel la première trame de requête de service comprend un champ utilisé pour demander un service multi-AP, et le champ utilisé pour demander le service multi-AP est utilisé pour indiquer une pluralité d'AP pour desservir la STA dans une même période de temps ; et
la réception (S360), par la STA, d'un premier message de réponse à une requête de service à partir de l'AP de desserte, dans lequel le premier message de réponse à un service comprend des informations de planification de période multi-AP et un élément d'informations multi-AP, les informations de planification de période multi-AP sont utilisées pour indiquer une période de service au cours de laquelle chacun de la pluralité d'AP fournit un service pour la STA, et l'élément d'informations multi-AP est utilisé pour indiquer l'AP qui fournit le service pour la STA ; et
**caractérisé en ce que** la première trame de requête de service comprend en outre un champ d'indication de type d'opération multi-AP, et le champ d'indication de type d'opération multi-AP est utilisé pour indiquer une classification de trafic lorsque la pluralité d'AP desservent la STA dans la même période de temps, la classification de trafic indiquant que la pluralité d'AP doivent fournir l'un ou les deux parmi un service de transmission de données et un service d'entraînement de faisceau pour la STA dans la même période de temps.

2. Procédé selon la revendication 1, dans lequel la première trame de requête de service est l'une quelconque des suivantes :
une trame de requête d'ajout de flux de trafic ;
une trame de requête d'ajout d'acquittement par blocs ;
une trame de requête de période de service ; et
une trame de requête de service multi-AP.

3. Procédé de planification de période de service, comprenant en outre :
la réception (S310), par un point d'accès, AP, de desserte, d'une première trame de requête de service à partir d'une station STA, dans lequel la première trame de requête de service comprend un champ utilisé pour demander un service multi-AP, et le champ utilisé pour demander le service multi-AP est utilisé pour indiquer une pluralité d'AP pour desservir la STA dans une même période de temps, et dans lequel la première trame de requête de service comprend en outre un champ d'indication de type d'opération multi-AP, et le champ d'indication de type d'opération multi-AP est utilisé pour indiquer une classification de trafic lorsque la pluralité d'AP desservent la STA dans la même période de temps, la classification de trafic indiquant que la pluralité d'AP doivent fournir l'un ou les deux parmi un service de transmission de données et un service d'entraînement de faisceau pour la STA dans la même période de temps ;
l'envoi (S320), par l'AP de desserte, de la première trame de requête de service à un point d'accès, AP, de commande, dans lequel la première trame de requête de service comprend un champ utilisé pour demander un service multi-points d'accès, AP, et le champ utilisé pour demander le service multi-AP est utilisé pour indiquer une pluralité d'AP pour desservir une station STA dans la même période de temps ;
la réception (S350), par l'AP de desserte, d'un premier message de réponse à une requête de service envoyé par l'AP de commande, dans lequel le premier message de réponse à un service comprend des informations de planification de période multi-AP et un élément d'informations multi-AP, les informations de planification de période multi-AP sont utilisées pour indiquer une période de service au cours de laquelle chacun de la pluralité d'AP fournit un service pour la STA, et l'élément d'informations multi-AP est utilisé pour indiquer l'AP qui fournit le service pour la STA ; et
l'envoi (S360), par l'AP de desserte, du premier message de réponse à une requête de service à la STA.

4. Procédé selon la revendication 3, dans lequel la première trame de requête de service est l'une quelconque des suivantes :
une trame de requête d'ajout de flux de trafic ;
une trame de requête d'ajout d'acquittement par blocs ;
une trame de requête de période de service ; et
une trame de requête de service multi-AP.

5. Procédé selon la revendication 3 ou 4, dans lequel, avant l'envoi d'une première trame de requête de service à un point d'accès de commande, le procédé comprend en outre :
la réception (S310) de la première trame de requête de service envoyée par la STA.

6. Procédé selon l'une quelconque des revendications 3 à 5, comprenant en outre :
la réception (S320), par le point d'accès, AP, de commande, d'une première trame de requête de service envoyée par le point d'accès, AP, de desserte, dans lequel la première trame de requête de service comprend un champ utilisé pour demander un service multi-AP, et le champ utilisé pour demander le service multi-AP est utilisé pour indiquer une pluralité d'AP pour desservir une station STA dans une même période de temps ;
la détermination (S330), par l'AP de commande, de la pluralité d'AP qui desservent la STA sur la base d'un paramètre d'exigence de la STA qui est inclus dans la première trame de requête de service ; et
l'envoi (S340), par l'AP de commande, d'un premier message de réponse à une requête de service à la pluralité d'AP, dans lequel le premier message de réponse à un service comprend des informations de planification de période multi-AP et un élément d'informations multi-AP, les informations de planification de période multi-AP sont utilisées pour indiquer une période de service au cours de laquelle chacun de la pluralité d'AP fournit un service pour la STA, et l'élément d'informations multi-AP est utilisé pour indiquer l'AP qui fournit le service pour la STA.

7. Procédé selon la revendication 6, dans lequel, lorsque la première trame de requête de service est une trame de requête d'ajout de flux de trafic, un champ réservé dans la trame de requête d'ajout de flux de trafic est utilisé pour indiquer de demander le service multi-AP, et un champ de type d'allocation dans la trame de requête d'ajout de flux de trafic est utilisé pour indiquer un type d'opération multi-AP.

8. Appareil, configuré pour réaliser le procédé réalisé par la STA selon la revendication 1 ou 2, ou configuré pour réaliser le procédé réalisé par l'AP de desserte selon l'une quelconque des revendications 3 à 5.

9. Support lisible par ordinateur, configuré pour stocker un programme informatique, dans lequel le programme informatique comprend des instructions utilisées pour mettre en œuvre le procédé réalisé par la STA selon la revendication 1 ou 2, ou le procédé réalisé par l'AP de desserte selon l'une quelconque des revendications 3 à 5.

10. Produit de programme informatique, dans lequel le produit de programme informatique comprend des instructions de programme informatique, et lorsque les instructions de programme informatique sont exécutées sur un ordinateur, l'ordinateur est activé pour mettre en œuvre le procédé réalisé par la STA selon la revendication 1 ou 2, ou le procédé réalisé par l'AP de desserte selon l'une quelconque des revendications 3 à 5.
